# EUROPEAN PATENT APPLICATION

(11) **EP 4 249 894 A2**
(43) Date of publication of application: **27.09.2023**
(21) Application number: 23163015.3
(22) Date of filing: 21.03.2023
(51) Int. Cl.: G01N 21/25, G01N 21/31

(54) **OPTICAL MEASUREMENT SYSTEM WITH MULTIPLE LAUNCH SITES**

(30) Priority: 25.03.2022 US 202263323721 P; 14.03.2023 US 202318121427
(71) Applicant: Apple Inc., Cupertino, CA 95014 (US)
(72) Inventor: PELC, Jason S., Cupertino, CA, 95014 (US); ARBORE, Mark A., Cupertino, CA, 95014 (US); TERREL, Matthew A., Cupertino, CA, 95014 (US); GREENING, Thomas C., Cupertino, CA, 95014 (US); TU, Yongming, Cupertino, CA, 95014 (US); GAN, Lucia, Cupertino, CA, 95014 (US)
(74) Representative: Lang, Johannes

(57) **Abstract**

Various embodiments disclosed herein describe optical measurement systems for characterizing a sample. The optical measurement systems may selectively emit light from different numbers of launch groups, and may include a multi-stage optical switch network that may be controlled to route light to a desired number of launch groups. The optical measurement systems may further measure light using a corresponding number of detector groups. The optical measurement systems may perform measurements using a plurality of different wavelengths, where different groups of these wavelengths may be measured using different numbers of launch groups (as well as corresponding detector groups).

## Description

### CROSS-REFERENCE TO RELATED APPLICATION

This application is a nonprovisional and claims the benefit under 35 U.S.C. § 119(e) of U.S. Provisional Patent Application No. 63/323,721, filed March 25, 2022, the contents of which are incorporated herein by reference as if fully disclosed herein.

### FIELD

The described embodiments relate generally to optical measurement systems. More particularly, the described embodiments describe optical measurement systems that can selectively output light to different sets of launch sites.

### BACKGROUND

Optical measurement systems can be used to identify the presence, type, and/or one or more characteristics of objects or substances in the environment surrounding the system. In some instances, an optical measurement system can perform spectroscopic measurements by emitting light at multiple wavelengths and measuring light returned to the system. The relative amounts of light returned at each wavelength may provide information about the nature of the material or materials being measured. As the number of wavelengths measured by an optical measurement system and the number of unique measurement locations each increase, these optical systems may require increasingly complex architectures that may further increase power consumption and/or measurement time required to perform a measurement. Thus, a compact, time- and power-efficient optical measurement system may be desired.

### SUMMARY

Described herein are optical measurement systems and methods determining one or more properties of a sample. In some of these embodiments, an optical measurement system includes a light source unit capable of generating light at any of a plurality of wavelengths, a multi-stage optical switch network optically connected to the light source unit and comprising a plurality of outputs, and a plurality of launch groups, each of which is optically connected to a corresponding output of the plurality of outputs. The optical measurement system further includes a plurality of detector groups, and a controller configured to perform a measurement sequence using the light source unit, the multi-stage optical switch network, the plurality of launch groups, and the plurality of detector groups. The measurement sequence comprises dividing the plurality of wavelengths into a plurality of groups, wherein each group of the plurality of groups is associated with a different corresponding output configuration, and performing a set of measurements for each wavelength of the plurality of wavelength at the corresponding output configuration.

In some instances the plurality of groups includes a first group associated with a first output configuration and a second group associated with a second output configuration. Performing the set of measurements for each wavelength of the plurality of wavelengths includes performing a first set of measurements for a first wavelength of the first group. Each measurement of the first set of measurements includes generating light at the first wavelength using the light source unit, emitting the generated light from a corresponding set of launch groups selected from the plurality of launch groups and having a first number of launch groups corresponding to the first output configuration, and measuring return light received during emission of the generated light using a corresponding set of detector groups selected from the plurality of detector groups and having the first number of detector groups.

The measurement of the set of measurements also includes performing a second set of measurements for a second wavelength of the second group. Each measurement of the second set of measurements includes generating light at the second wavelength using the light source unit, emitting the generated light from a corresponding set of launch groups selected from the plurality of launch groups and having a second number of launch groups corresponding to the second output configuration, and measuring return light received during emission of the generated light using a corresponding set of detector groups selected from the plurality of detector groups and having the second number of detector groups.

In some instances, the first set of measurements includes multiple measurements having different corresponding sets of launch groups and different corresponding sets of detector groups. Additionally or alternatively, each measurement of the first set of measurements includes configuring the multi-stage optical switch network to route the light at the first wavelength to the corresponding set of launch groups. In some instances, each of these measurements further includes measuring background light received prior to emission of the generated light using the corresponding set of detector groups, such that configuring the multi-stage optical switch network in each measurement of the first set of measurements is performed at least partially concurrently with measuring the background light.

In others of these embodiments, an optical measurement system includes a light source unit capable of generating light at any of a plurality of wavelengths, a multi-stage optical switch network optically connected to the light source unit, and a plurality of launch groups. The multi-stage optical switch network comprises a plurality of outputs, each of which is optically connected to a corresponding launch group of the plurality of launch groups. Additionally, the multi-stage optical switch network is controllable to selectively route light generated by the light source unit to the plurality of launch groups at different output configurations. In some instances the multi-stage optical switch network includes a plurality of inputs.

In some variations, the optical measurement system further includes a photonic integrated circuit, wherein the photonic integrated circuit includes the light source unit, the multi-stage optical network, and the plurality of launch groups. In some of these variations, each launch group comprises a corresponding outcoupler configured to launch light from the photonic integrated circuit. Additionally or alternatively, the optical measurement system further includes a plurality of detector groups and an interposer, where the photonic integrated circuit and the plurality of detector groups are mounted on the interposer.

Additionally or alternatively, the optical measurement system may include a first wavelength locking unit. In some of these variations, the multi-stage optical switch network comprises a first stage and a second stage, the first stage comprising a first controllable switch. The first controllable switch includes a first tap, and the first wavelength locking unit is optically connected to a multi-stage optical switch network via the first tap. In some of these variations, the first stage also includes a second controllable switch that has a second tap, and a second wavelength locking unit is optically connected to the multi-stage optical switch network via the second tap.

In other embodiments, a method of characterizing a sample includes selecting a plurality of wavelengths and performing a measurement sequence to generate a plurality of sets of output signals. The measurement sequence includes dividing the plurality of wavelengths into a plurality of groups, wherein each group of the plurality of groups is associated with a different corresponding output configuration. The measurement sequence also includes performing a set of measurements of the sample for each wavelength of the plurality of wavelengths at the corresponding output configuration, and generating, for each set of measurements, a corresponding set of output signals of the plurality of output signals. The method further includes determining one or more properties of the sample using the plurality of sets of output signals.

In some of these methods, the plurality of groups includes a first group associated with a first output configuration and a second group associated with a second output configuration. Performing the set of measurements of the sample for each wavelength of the plurality of wavelengths includes performing a first set of measurements of the sample for a first wavelength of the first group. Each measurement of the first set of measurements includes generating light at the first wavelength, and emitting the generated light from a corresponding set of launch groups selected from a plurality of launch groups and having a first number of launch groups corresponding to the first output configuration. Each measurement also includes measuring return light received during emission of the generated light using a corresponding set of detector groups selected from a plurality of detector groups and having the first number of detector groups.

Performing the set of measurements of the sample for each wavelength of the plurality of wavelengths also includes performing a second set of measurements of the sample for a second wavelength of the second group. Each measurement of the second set of measurements includes generating light at the second wavelength and emitting the generated light from a corresponding set of launch groups selected from the plurality of launch groups and having a second number of launch groups corresponding to the second output configuration. Each measurement also includes measuring return light received during emission of the generated light using a corresponding set of detector groups selected from the plurality of detector groups and having the second number of detector groups.

In some of these methods, the first set of measurements includes multiple measurements having different corresponding sets of launch groups and different corresponding sets of detector groups. Additionally or alternatively, each measurement of the first set of measurements further includes configuring a multi-stage optical switch network to route the light generated at the first wavelength to the corresponding set of launch groups. In some of these methods, each measurement of the first set of measurements further includes measuring background light received prior to emission of the generated light using the corresponding set of detector groups. In these instances, configuring the multi-stage optical switch network in each measurement of the first set of measurements is performed at least partially concurrently with measuring the background light.

In other variations of these methods, the measurement sequence is divided into a plurality of subsequences. In some examples, each subsequence has a corresponding set of wavelengths of the plurality of wavelengths and a corresponding set of launch groups selected from a plurality of launch groups. Each subsequence includes a measurement of the sample for each wavelength in the corresponding set of wavelengths, during which light of the wavelength is emitted from the corresponding set of launch groups.

In addition to the exemplary aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1A shows a cross-sectional side view of a device incorporating an optical measurement system as described herein. FIG. 1B shows a top view of the device of FIG. 1A.
FIG. 2 shows a schematic diagram of a variation of an optical measurement system as described herein.
FIGS. 3A-3D depict schematic views of variations of controllable switches that may be used with the multi-stage optical switch networks described herein.
FIG. 4 shows a schematic diagram of a variation of an optical measurement system having a multi-stage optical switch network with one input and four outputs.
FIG. 5 shows a schematic diagram of a variation of an optical measurement system having a multi-stage optical switch network with two inputs and four outputs.
FIG. 6 shows a schematic diagram of a variation of an optical measurement system having a multi-stage optical switch network with four inputs and four outputs.
FIG. 7 depicts a method of performing a measurement sequence.
FIG. 8 depicts a block diagram of a measurement sequence that includes a plurality of subsequences corresponding to different sets of launch groups.
FIG. 9 depicts a timing diagram of a measurement sequence that includes a plurality of individual measurements.

It should be understood that the proportions and dimensions (either relative or absolute) of the various features and elements (and collections and subsettings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

Directional terminology, such as "top", "bottom", "upper", "lower", "front", "back", "over", "under", "above", "below", "left", "right", "vertical", "horizontal", *etc.* is used with reference to the orientation of some of the components in some of the figures described below, and is not intended to be limiting. Because components in various embodiments can be positioned in a number of different orientations, directional terminology is used for purposes of illustration only and is in no way limiting. The directional terminology is intended to be construed broadly, and therefore should not be interpreted to preclude components being oriented in different ways. Also, as used herein, the phrase "at least one of" preceding a series of items, with the term "and" or "or" to separate any of the items, modifies the list as a whole, rather than each member of the list. The phrase "at least one of" does not require selection of at least one of each item listed; rather, the phrase allows a meaning that includes at a minimum one of any of the items, and/or at a minimum one of any combination of the items, and/or at a minimum one of each of the items. By way of example, the phrases "at least one of A, B, and C" or "at least one of A, B, or C" each refer to only A, only B, or only C; any combination of A, B, and C; and/or one or more of each of A, B, and C. Similarly, it may be appreciated that an order of elements presented for a conjunctive or disjunctive list provided herein should not be construed as limiting the disclosure to only that order provided.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

The following disclosure relates to embodiments of optical measurement systems having multiple launch sites, and methods of performing measurements using these optical measurement systems. The optical measurement system is capable of simultaneously routing light to an adjustable number of launch groups (each associated with one or more launch sites), thereby allowing the optical system to perform multiple measurements, each using a different number of launch groups. In other words, a first set of measurements includes emitting light from a first number of launch groups simultaneously and a second set of measurements includes emitting light from a second number (different than the first) of launch groups simultaneously.

The optical measurement system may perform a measurement sequence using a plurality of wavelengths, wherein a set of individual measurements (e.g., at least one measurement) is performed for each wavelength of the plurality of wavelengths. In these instances, the plurality of wavelengths is divided into multiple groups, each of which is associated with a different number of launch groups (i.e., across which light generated by the optical measurement system is split). Accordingly, the set of individual measurements for a given wavelength will be performed using a number of simultaneous launch groups that is set based on the group to which the wavelength is assigned.

When performing a spectroscopic measurement using a plurality of different wavelengths, there may be wavelength-dependent variations in signal quality. Depending on what is being measured by the optical measurement system (e.g., the type or characteristics of a sample that is being measured in the environment surrounding the optical measurement system), the signal-to-noise ratio ("SNR") for individual measurements at different wavelengths can be limited by different noise sources. For example, measurements of a sample taken at some wavelengths will be limited by fundamental noise. In these instances, the SNR may be increased by increasing the amount of light introduced into the sample for these wavelengths. On the other hand, measurements taken at other wavelengths may be limited by coherent noise. In these instances, the SNR will not be improved by increasing the amount of light introduced into the sample at these wavelengths. The optical measurement systems described herein can account for different noise sources that are anticipated in measuring a sample, and can select different measurement types for different wavelengths accordingly (as will be discussed in more detail below).

The optical measurement systems described herein typically include a light source unit, a multi-stage optical switch network, a plurality of launch groups, and a plurality of detector groups. The light source unit has one or more outputs, and is capable of generating light at any of a plurality of different wavelengths (including a corresponding set of wavelengths for each output of the light source unit). In other words, at any given point in time the light source unit may be controlled to generate a wavelength of light selected from the plurality of different wavelengths (i.e., the plurality of different wavelengths need not be generated simultaneously).

The light source unit is optically connected to (i.e., capable of transmitting light to) the multi-stage optical switch network, thereby allowing the multi-stage optical switch network to receive light from the light source unit (e.g., via the one or more outputs of the light source unit). The multi-stage optical switch network includes a plurality of outputs, each of which is optically connected to a corresponding launch group of the plurality of launch groups (though it should be appreciated that the multi-stage optical switch network may include one or more additional outputs not optically connected to a corresponding launch group). The multi-stage optical switch network is controllable to selectively route light to some or all of its outputs (and thus to some or all of the plurality of launch groups), which may facilitate the different measurement types as described herein. Each launch group is associated with a corresponding set of launch sites, where each launch site corresponds to a spatial location at which light is emitted externally from the optical measurement system (e.g., toward a sample). Overall, the optical measurement system is able to selectively launch light to different locations at the sample, and may further select the number of different launch locations that receive light simultaneously.

The plurality of detector groups measure light received by the optical measurement system (e.g., light that has been emitted from the optical measurement system toward a sample and returned to the optical measurement system). The light measured by the plurality of detector groups may be analyzed to determine one or more properties of the environment surrounding the optical measurement system (e.g., the presence, type, and/or one or more characteristics of an object measured by the optical measurement system), which will collectively be referred to herein as a "sample". Light may be measured by the detector groups while the launch groups are emitting light (for determining how the emitted light interacts with the sample), and may optionally be measured while the launch groups are not actively emitting light (for measuring background light which can assist in background correction operations).

For each measurement in a given measurement sequence, the optical measurement system controls (e.g., via a controller) the light source unit to generate light at a corresponding wavelength. The optical measurement system further controls the multi-stage optical switch network to route light at that wavelength to a predetermined number of launch groups. The generated light is emitted from that set of launch groups (and thus may exit the optical measurement system), a portion of which is returned to the optical measurement system (e.g., by interacting with a sample external to the optical measurement system). A corresponding set of detector groups measures return light received while the optical measurement system emits the generated light.

The embodiments of the optical measurement systems described herein may be incorporated into a device having a housing. The device, which in some instances is wearable, may operate solely to take measurements using the optical measurement system or may be a multi-functional device capable of performing additional functions (not discussed in detail herein). For example, in some instances the optical measurement system may be incorporated into a smart phone, tablet computing device, laptop or desktop computer, a smartwatch, or other electronic device (collectively referred to herein as "electronic devices" for ease of discussion).

The device may include a display (which may be a touchscreen display) that provides a graphical output that is viewable through or at an exterior surface of the device. When the display is configured as a touchscreen, the display may be capable of receiving touch inputs at the exterior surface. The device may include a cover sheet (e.g., a cover glass) positioned over the display that forms at least a portion of the exterior surface. The display is capable of providing graphical outputs and, when configured as a touch screen, receiving touch inputs through the cover sheet. In some embodiments, the display includes one or more sensors (e.g., capacitive touch sensors, ultrasonic sensors, or other touch sensors) positioned above, below, or integrated with the display portion. In various embodiments, a graphical output of the display is responsive to inputs provided to the electronic device. The portable electronic device may include additional components typical of computing devices, including a processing unit, memory, input devices, output devices, additional sensors, and the like.

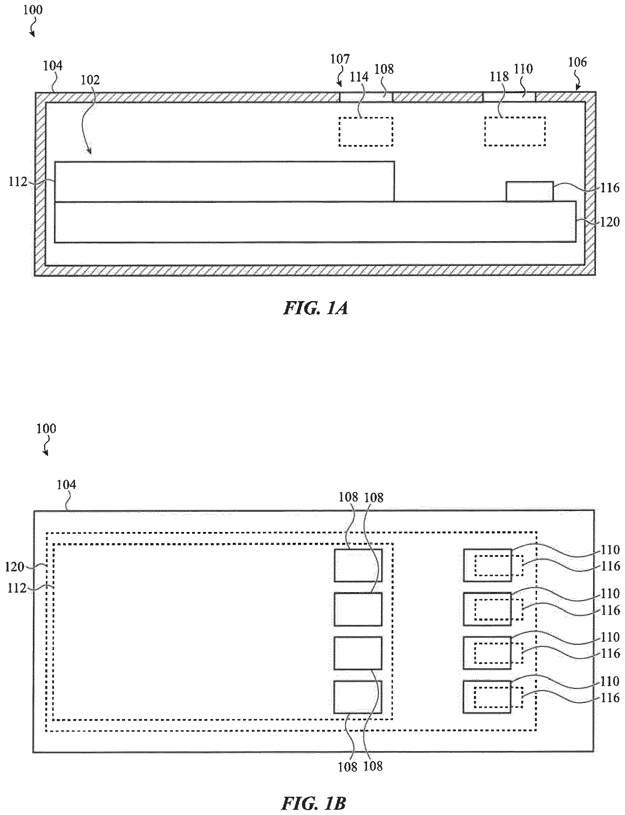

These and other embodiments are discussed with reference to FIGS. 1A-9. However, those skilled in the art will readily appreciate that the detailed description given herein with respect to these figures is for explanatory purposes only and should not be construed as limiting.

FIGS. 1A and 1B show an example of a device 100 that houses an optical measurement system 102 as described herein. As shown the device 100 comprises a housing 104 having a top exterior surface 106. This exterior surface 106 defines a sampling interface 107 for the optical measurement system 102, through which light emitted by the optical measurement system 102 can exit the device 100 and re-enter the device 100 to return to the optical measurement system 102. The sampling interface 107 includes at least one window that defines one or more emission regions 108 (through which light emitted by the optical measurement system 102 may exit the device 100) and one or more collection regions 110 (through which light entering the device 100 may reach a predetermined portion of the optical measurement system 102, such as a detector).

In the variation shown in FIGS. 1A and 1B, the device includes a plurality of emission regions 108 and a plurality of collection regions 110. While FIGS. 1A and 1B depict an equal number of emission regions 108 and collection regions 110, in other instances a sampling interface 107 has an unequal number of emission regions 108 and collection regions 110. Each emission region 108 and collection region 110 is transparent at each of the wavelengths used by the optical measurement system 102 to perform the measurements discussed herein (collectively the "measurement wavelengths"). Each emission region 108 and collection region 110 may be defined by a corresponding window (transparent at the measurement wavelengths) that are separated from each other by one or more opaque portions of the housing (i.e., that absorb or otherwise block light transmission at the measurement wavelengths). In other variations, some or all of the emission regions 108 and/or collection regions 110 are defined in a common window (e.g., using a mask that is opaque at the measurement wavelengths). Additionally or alternatively, the device 102 may include barriers, baffles, or other light-blocking structures (not shown) that may at least partially define some or all of the emission regions 108 and collection regions 110. These light-blocking structures block stray light and act as a guide to limit the paths that light can take between the optical measurement system 102 and the sampling interface 107.

As shown in FIGS. 1A and 1B, the optical measurement system 102 comprises a photonic integrated circuit 112. The photonic integrated circuit 112 includes at least a multi-stage optical switch network (not shown) and a plurality of launch groups (not shown), and is able to selectively emit light from the multiple spatial locations on the photonic integrated circuit 112 via the plurality of launch groups. Light emitted from the photonic integrated circuit 112 can exit the device 100 through the sampling interface 107 (e.g., via the emission regions 108). In some variations, the optical measurement system 102 optionally includes one or more light modification components, shown schematically as box 114, positioned between the photonic integrated circuit 112 and the sampling interface 107, which alters the light emitted photonic integrated circuit 112 before it reaches the sampling interface 107. For example, the light modification components 114 may include one or more lenses (which change the divergence and/or direction of the light), one or more diffusers, mirrors, or the like. Additionally or alternatively, the sampling interface itself may act as a light modification component (e.g., it may have an integrated lens or the like that can change the divergence and/or direction of the light passing therethrough). Each launch group interacts with the sampling interface 107 and any intervening components (such a light modification components 114) to control where the light exits from device 100, and thus defines the launch sites for the optical measurement system 102.

The optical measurement system further comprises a plurality of detector groups 116, each of which includes a corresponding set of detectors. The detector groups 116 are each positioned within the device 100 to receive light that has entered the device 100 through the sample interface (e.g., via a corresponding collection region 110). In some variations the optical measurement system 102 comprises one or more light modification components, shown schematically as box 118, positioned between the sampling interface 107 and at least one detector group 116, which alters the light that enters the device 100 before it reaches the corresponding detector group (or groups). The light modification components 118 may include one or more lenses (which change the divergence and/or direction of the light), one or more diffusers, mirrors, or the like. Additionally or alternatively, the sampling interface 107 may act as a light modification component.

In some instances, the photonic integrated circuit 112 and the plurality of detector groups 116 are mounted to a common component. For example, in the variation shown in FIGS. 1A and 1B, the optical measurement system 102 comprises an interposer 120. In these instances, the photonic integrated circuit 112 and the plurality of detectors 116 are all mounted on the interposer 120, which in turn may act as an electrical interface for these components (e.g., to route signals to and/or from the components). In some instances, the interposer also acts as a heat sink. In other variations, the photonic integrated circuit 112 is mounted to a separate component than some or all of the plurality of detector groups 116. In still other variations, some or all of the plurality of detector groups 116 are directly mounted on (or otherwise integrated into) a portion the photonic integrated circuit 112.

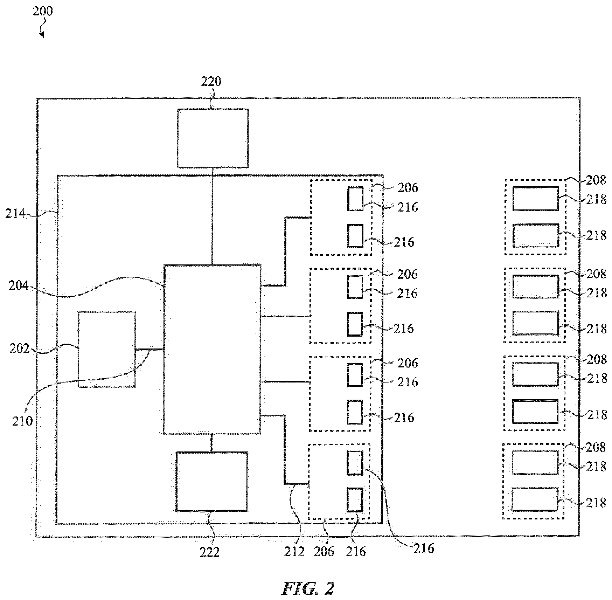

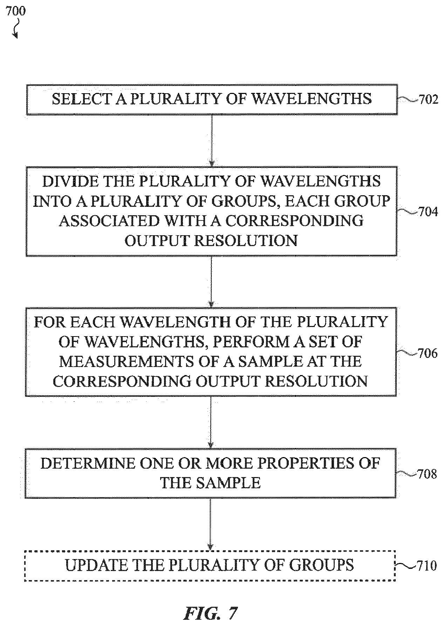

The device 100 shown in FIGS. 1A and 1B can utilize any of the optical measurement systems described herein (such as those described with respect to FIGS 2-6 below) and perform any measurement sequence described herein (such as those described with respect to FIGS. 7-9 below). For example, FIG. 2 shows a schematic diagram of an optical measurement system 200 as described herein. The optical measurement system 200 includes a light source unit 202, a multi-stage optical switch network 204, a plurality of launch groups 206, and a plurality of detector groups 208. The optical measurement system 200 is able to generate light and selectively route the light to some or all of the plurality of launch groups 206. The light may exit the optical measurement system 200 via the plurality of launch groups 206, and may measure light returned to the optical measurement system 200 using some or all of the detector groups 208.

Specifically, the light source unit 202 includes a set of light sources (not shown), each of which is selectively operable to emit light at a corresponding set of wavelengths. Each light source may be any component capable of generating light at one or more particular wavelengths, such as a light-emitting diode or a laser. A laser may include a semiconductor laser, such as a laser diode (e.g., a distributed Bragg reflector laser, a distributed feedback laser, an external cavity laser), a quantum cascade laser, or the like. A given light source may be single-frequency (fixed wavelength) or may be tunable to selectively generate one of multiple wavelengths (i.e., the light source may be controlled to output different wavelengths at different times). The set of light sources may include any suitable combination of light sources, and collectively may be operated to generate light at any of a plurality of different wavelengths.

The light source unit 202 includes one or more outputs 210 that are optically connected to the multi-stage optical switch network 204 to route light thereto. These one or more outputs 210 collectively allow the light source unit 202 to route any of a plurality of different wavelengths to the multi-stage optical switch network 204. While a single output 210 is shown in FIG. 2, it should be appreciated that in some variations the light source unit 202 includes a plurality of outputs. Each output 210 can route a corresponding set of wavelengths to the multi-stage optical switch network 204, which collectively make up the plurality of different wavelengths that can be routed to the multi-stage optical switch network 204. In some instances the light source unit 202 includes more light sources than outputs 210, in which case the light source unit 202 includes one or more multiplexers (not shown) to allow multiple light sources to contribute light to a single output 210. This allows the light source unit 202 to include several light sources (and thus be capable of generating several different wavelengths) while having a relatively small number of outputs 210.

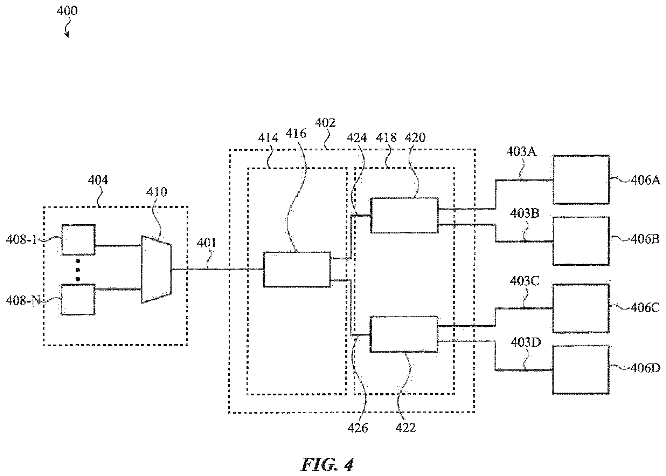

It should be appreciated that the light source unit 202 may further include one or more additional outputs (i.e., that do not route light to the multi-stage optical switch network 204) that instead route light to other portions of the optical measurement system 200. For example, one or more of these additional outputs may route light to a wavelength locking unit (such as discussed in more detail below). In some instances, the light source unit 202 is able to generate more wavelengths than those that are routed to the multi-stage optical switch network 204 during operation of the optical measurement system 200 (i.e., the light source unit 202 is capable of generating any of a plurality of wavelengths, but the optical measurement system 200 uses only a subset of the plurality of wavelengths as measurement wavelengths for performing measurements using the multi-stage optical switch network 204). This may support additional functionality of the optical measurement system 200 beyond that described in the present application. Examples of light source units suitable for use with the optical measurement systems described herein are discussed in more detail below with respect to FIGS. 4-6.

The multi-stage optical switch network 204 has at least one input (which in some instances includes a plurality of inputs) and a plurality of outputs 210. The multi-stage optical switch network 204 receives light from the light source unit 202 via the one or more inputs, each of which is optically connected to a corresponding output 210 of the light source unit 202. The inputs of the multi-stage optical switch network 204 are not separately labeled in FIG. 2, and it should be appreciated that the optical measurement system 200 may optionally include additional components (not shown) between an output 210 of the light source unit 202 and a corresponding input of the multi-stage optical switch network 204. These additional components may be useful in instances, for example, where it is desirable to modify light generated by the light source unit 202 before it reaches the multi-stage optical switch network 204. Each of the plurality of outputs 202 is optically connected to a corresponding launch group of the plurality of launch groups 206, thereby allowing the multi-stage optical switch network 204 to selectively route light to some or all of the plurality of launch groups 206.

Specifically, the multi-stage optical switch network 204 is controllable to take light at a predetermined wavelength that is received at one of its inputs and to simultaneously direct that light to one or more of its outputs 212. In some instances, the multi-stage optical switch network 204 is controlled to direct light to a single output 212. In other instances, the multi-stage optical switch network 204 is controlled to split light between multiple outputs 212, such that light is directed to multiple outputs simultaneously. For the purpose of this application, the "output configuration" (also referred to herein as the "output resolution") of the optical measurement system refers to the number of unique launch groups that simultaneously receive light. The optical measurement systems are capable of emitting light at different output configurations, each of which corresponding to a different number of launch groups that simultaneously receive light.

The multi-stage optical switch network can set the output configuration of the optical measurement system by setting the number of its outputs that will simultaneously output light received by the light source unit. The number of different output configurations for an optical measurement system is dependent on the number of outputs of the multi-stage optical switch network. For example, in the embodiment shown in FIG. 2, the multi-stage optical switch network 204 has four outputs and may output light at four different output configurations (i.e., to a single output 212 or split between two, three, or four of the outputs 212). Within a given output configuration, specifically those that use only a subset of the outputs of the multi-stage optical switch network 204, the optical measurement system may include multiple different subconfigurations in which different subsets of outputs of the outputs simultaneously receive light. In other words, there may be multiple unique sets of launch groups 206 that have the same output configuration, and the optical measurement system may perform individual measurements at some or all of these unique sets of launch groups during a measurement sequence. Each of these individual measurements are considered to be measurements taken using the same output configuration since the same number of launch groups receive light simultaneously. When light is split between multiple outputs for a given output configuration, the multi-stage optical switch network 204 may provide any distribution of light (equal or unequal splitting) between the outputs as desired. The details of how the multi-stage optical switch network 204 may be controlled to switch between different output configurations (and different sets of launch groups for a given output configuration) will be discussed in more detail below.

The multi-stage optical switch network 204 and the plurality of launch groups 206 are formed as part of a photonic integrated circuit 214. Some or all of the light source unit 202 may also be integrated into the photonic integrated circuit 214. For example, in some instances the light sources and any multiplexers of the light source unit 202 are all integrated into the photonic integrated circuit 214 (such as shown in FIG. 2). In other instances some or all of the light sources generate light externally from the photonic integrated circuit 214 and light from these light sources is coupled into the photonic integrated circuit 214 to reach the multi-stage optical switch network 204. The photonic integrated circuit 214 may utilize waveguides to optically connect the components on the photonic integrated circuit 214. For example, in the embodiment shown in FIG. 2, the outputs 210 of the light source unit 202, and the inputs and outputs 212 of the multi-stage optical switch network 204 may be waveguides.

Each of the plurality of launch groups 206 is optically connected to a corresponding output 212 of the multi-stage optical switch network 204, and may launch light received from the light source unit 202 out of the photonic integrated circuit 214. For example, the photonic integrated circuit 214 may include a plurality of outcouplers (e.g., an edge coupler, a vertical output coupler, or the like) for launching light from the photonic integrated circuit 214, and each launch group 206 may include at least one outcoupler of the plurality of outcouplers. In the variation shown in FIG. 2, each launch group 206 has an outcoupler 216. Light launched from the photonic integrated circuit 214 (e.g., via an outcoupler 216) may exit the optical measurement system 200 (and any device incorporating the optical measurement system 200) at one or more launch sites toward a sample (e.g., through a sampling interface as discussed above with respect to FIG. 1).

Each launch group 206 is associated with at least one launch site, such that light passed to the launch group 206 may exit the optical measurement system 200 (and any device incorporating the optical measurement system 200) at the corresponding launch site. Each launch site provides a unique entry position and/or angle to a sample. In some instances, this means that each launch site is spatially separated from (and noncontiguous with) the other launch sites (e.g., at a sampling interface such as described above with respect to FIGS. 1A and 1B). In other variations, two or more launch locations may at least partially overlap, but exit the optical measurement system 200 at different angles such that light is directed to different portions of a sample.

A launch group 206 may be associated with a single launch site or with multiple launch sites. For example, in the variation shown in FIG. 2, each launch group 206 includes two outcouplers 216. In some of these variations, each outcoupler 216 within a given launch group 206 is associated with a separate launch site, such that a first outcoupler of the launch group emits light from the photonic integrated circuit 214 to a first launch site and the second outcoupler 216 within the launch group emits light from the photonic integrated circuit 214 to a second launch site. In other variations, multiple outcouplers within the launch group emit light from the photonic integrated circuit 214 to a single launch site. Additionally or alternatively, light launched from the photonic integrated circuit 214 by a given outcoupler 216 can be routed to two or more launch sites, in which case the optical measurement system 200 is configured to split the light launched by the outcoupler 216 into multiple separate beams (each of which is routed to its own launch site).

Accordingly, the plurality of launch groups 206 may be used to emit light from the optical measurement system 200 at any of plurality of launch sites (the selection and number of launch sites emitting light at a given moment is at least partially determined by the operation of the multi-stage optical switch network 204). This light can be used to illuminate one or more portions of a sample, and a portion of this light may be returned to the system as a result of interactions with the sample (e.g., via reflection, scattering, or the like). The returned light may in turn be measured by some or all of the plurality of detector groups 208.

Each detector group of the plurality of detector groups 208 may be associated with a corresponding launch group 206. In these instances, the optical measurement system 200 may be configured such that a given detector group 208 will receive light emitted by its corresponding launch group 206 (and returned from the environment surrounding the optical measurement system 200), but will not receive light that has been emitted by the other launch groups 206. It should be appreciated that the light received by the optical measurement system 200 is dependent on the actual sample measured by the optical measurement sample, and thus the optical measurement system 200 may be designed assuming it will be used to measure a target sample having one or more predetermined characteristics. For example, the optical measurement system 200 may be configured such that only light entering the optical measurement system 200 at a predetermined range of positions and angles will reach the detector group 208. These positions and angles can be selected such that, when measuring a sample with certain characteristics matching the target sample, the detector group 208 effectively receives light only from the corresponding launch group 206 (and minimal or no light from the launch groups associated with other detector groups).

Each detector group 208 includes one or more sets of detector elements, where each set of detector elements is schematically represented by a single box 218. Each set includes at least one detector element, and each detector element is capable of generating a corresponding signal representative of light incident thereon. Individual detector elements can either be a standalone detector or a sensing element of a detector array (e.g., a photodiode of a photodiode array). It should be appreciated that different sensing elements of a single detector array may be associated with different detector groups 208. For example, a detector array may include a first subset of sensing elements associated with a first detector group and a second subset of sensing elements associated with a second detector group.

It should also be appreciated that the detector elements within a given detector group 208 need not be immediately adjacent to each other. For example, in the variation of optical measurement system 200 shown in FIG. 2, each detector group 208 includes two sets of detector elements 218. In some of these variations, the optical measurement system 200 is configured such that each set of detector elements 218 measures light from a different launch site of the corresponding launch group 206. For example, light emitted from a first outcoupler in a first launch group is measured by a first set of detector elements of a first detector group, and light emitted from a second outcoupler in the first launch group is measured by a second set of detector elements of the first detector group. This may allow for physical spacing between launch sites of a given launch group without requiring that light emitted by these launch sites be measured by the same detector elements. Overall, the plurality of detector groups 208 measure light emitted from the optical measurement system 200 via the plurality of launch groups 206, which may facilitate the various measurements described herein.

Also shown in FIG. 2 is a controller 220, which controls operation of the optical measurement system 200 to perform the various measurements as described herein. Specifically, the controller 220 may control the light source unit 202 to cause the light source unit 202 to generate a selected wavelength of light at a selected output of the light source unit 202. The controller 220 may further control the multi-stage optical switch network 204 to configure the multi-stage optical switch network 204 to route light received from the selected output of the light source unit 202 to a selected number of outputs of the multi-stage optical switch network 204 (which in turn routes the light to a selected set of launch groups 206). The controller 220 may further control the plurality of detector groups 208 to generate output signals from some or all of the detector groups 208 that represent the light received by the detector groups 208. These output signals may be processed and analyzed to determine one or more properties of a sample. The controller 220 may include any combination of software, hardware, and firmware as needed to perform these functions (including any of the method steps described below), including, for example, one or more processors and/or application-specific integrated circuits (ASICs).

In some variations, the optical measurement system 200 includes a wavelength locking unit 222. The wavelength locking unit 222 can output a signal that is indicative of the wavelength or changes in wavelength of light received by the wavelength locking unit 222, which may be used by the controller 220 to control the light source unit 202 (e.g., the light source within the light source unit that is generating the light) to stabilize or otherwise adjust the wavelength of light emitted by the light source unit 202. Even for fixed wavelength lasers, the precise emission wavelength may vary slightly with changes in temperature and/or injection current, and thus the wavelength locking unit 222 may provide feedback to the controller 200 to set a stable wavelength output before or during a measurement.

In some instances, the wavelength locking unit 222 is optically connected to the light source unit 202 such that the wavelength locking unit 222 receives light directly from the light source unit 202. In instances where the light source unit 202 has multiple outputs, however, the wavelength locking unit 222 would need to tap light from every output from the light source unit 202 in order to be able to stabilize every wavelength produced by the light source unit 202. In other instances, the wavelength locking unit 222 receives light downstream of the multi-stage optical switch network 204 (i.e., the wavelength locking unit 222 taps light after it has passed through the multi-stage optical switch network 204). In these instances, the wavelength locking unit 222 would either need to tap light from each output 212 of the multi-stage optical switch network 204 or would need to route light to an output 212 (or outputs) that is tapped in order to perform wavelength stabilization/locking for all of the wavelengths outputted by the light source unit 202.

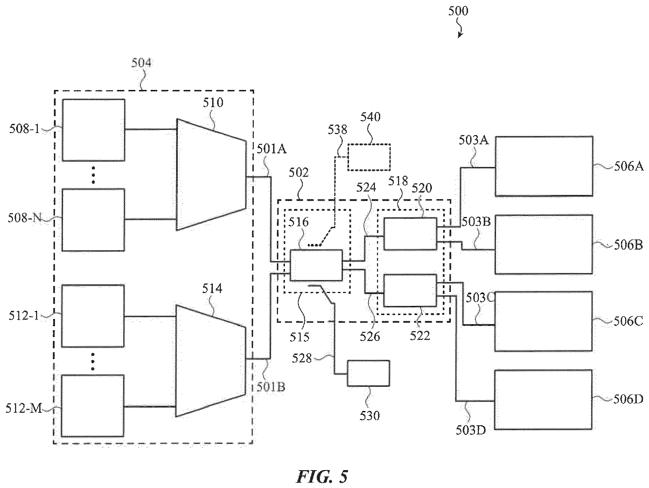

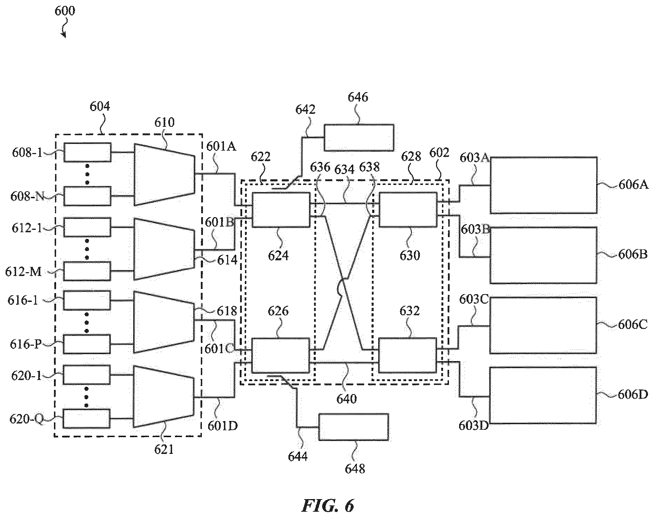

In still other instances, such as shown in FIG. 2, the wavelength locking unit 222 may receive light from a portion of the multi-stage optical switch network 204 (i.e., the wavelength locking unit 222 taps light from one or more stages of the multi-stage optical switch network 204). These instances may reduce the number of taps and/or the routing requirements needed to be able to stabilize every wavelength produced by the light source unit 202. Examples of this is discussed below with respect to FIGS. 5 and 6 below.

As mentioned above, the optical measurement systems described herein include a multi-stage optical switch network that can selectively output light at different output configurations. To do this, the multi-stage optical switch network includes a plurality of controllable switches that are divided into a plurality of different stages (each of which includes a corresponding set of controllable switches). Each controllable switch has at least one input and two outputs, where each input of the controllable switch receives light from either an input to the multi-stage optical switch network or a previous stage, and each output of the controllable switch directs light to either a successive stage or an output of the multi-stage optical switch network. Each controllable switch may be controlled such that light of a predetermined wavelength introduced to a predetermined input of the controllable switch is controllably directed either to a first output of the switch, to a second output of the switch, or split between the first output and the second output. Collectively, the plurality of controllable switches may be controlled to configure the multi-stage optical switch network to create the necessary pathways for light of a given wavelength to travel from a predetermined input of the multi-stage optical switch network to a desired set of outputs of the multi-stage optical switch network.

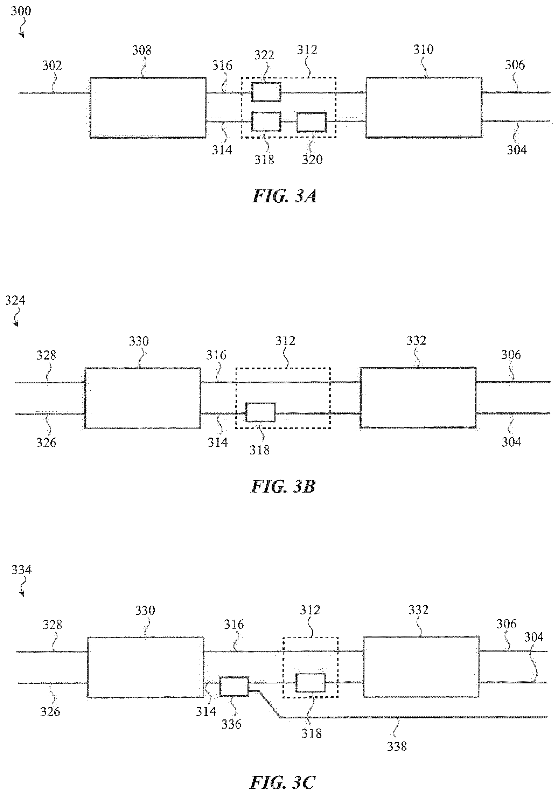

In some variations the controllable switch includes a first coupler, a second coupler, and a controllable phase tuner between the first coupler and the second coupler. The controllable phase tuner allows the controllable switch to selectively split light between the first and second outputs of the controllable switch. FIGS. 3A-3D depict variations of controllable switches suitable for use with the multi-stage optical switch networks described herein. FIG. 3A shows a variation of a 1×2 controllable switch 300 having a single input 302 and two outputs (a first output 304 and second output 306). As shown there, the controllable switch has a 1×2 coupler 308, a 2×2 coupler 310, and a controllable phase tuner 312 positioned between the 1×2 coupler 308 and the 2×2 coupler 310. In some variations, the 1×2 controllable switch 300 may include a 2×2 coupler instead the 1×2 coupler 308, but with one input of the 2×2 coupler left disconnected such that the other input of the 2×2 coupler acts as the single input of the 1×2 controllable switch.

In the variation of 1×2 controllable switch shown in FIG. 3A, the 1×2 coupler 308 uses the input 302 as its single input and uses a first leg 314 and a second leg 316 as outputs. Light received at the input 302 of the 1×2 controllable switch 300 is split by the 1×2 coupler 308 between the first leg 314 and the second leg 316 according to a predetermined splitting ratio. Similarly, the 2×2 coupler 310 receives light from the first leg 314 and second leg 316 as inputs and uses the first output 304 and the second output 306 of the 1×2 controllable switch 300 as outputs. Light received by each input of the 2×2 coupler 310 is split between the first output 304 and the second output 306 according to a corresponding predetermined splitting ratio. It should be appreciated that the input 302, first output 304, second output 306, first leg 314, and second leg 316 may each be a waveguide.

The relative amounts of light that are coupled into the first output 304 and the second output 306 depend at least on 1) relative amounts of light in first leg 314 and the second leg 316 as it enters the 2×2 coupler 310, 2) the phase difference between the light in the first leg 314 and the second leg 316 as it enters the 2×2 coupler 310, and 3) the wavelength of the light. As such, changing the phase difference between the first leg 314 and the second leg 316 changes the distribution of light between the first output 304 and the second output 306. Accordingly, the controllable phase tuner 312 is controllable to selectively adjust the phase difference between the first leg 314 and the second leg 316, thereby allowing the 1×2 controllable switch to controllably split light between its first output 304 and its second output 306. For example, the 1×2 controllable switch may use the controllable phase tuner 312 to selectively route light entirely to the first output 304, route light entirely to the second output 306, or simultaneously route light to both the first output 304 and the second output 306 (i.e., split the light between both outputs according to a target splitting ratio). Furthermore, control of the controllable phase tuner 312 may be adjusted to account for the wavelength of light introduced into the 1×2 controllable switch, such that a desired output of the 1×2 controllable switch may be achieved for any of the measurement wavelengths.

To adjust the phase difference between the first leg 314 and the second leg 316, the controllable phase tuner 312 includes one or more phase shifters that selectively modulate the phase of light passing through either the first leg 314 or the second leg 316. Examples of suitable phase shifters include, for example, electrooptic phase shifters that change the refractive index of a portion of a waveguide using an applied electric field (e.g., via carrier injection), thermo-optic phase shifters that change the refractive index of a portion of a waveguide by changing its temperature, and optomechanical phase shifters (e.g., a MEMs phase shifter) where a moveable structure (e.g., a suspended waveguide) is moved to change an amount evanescent coupling with the waveguide.

The controllable phase tuner 312 may include a single phase shifter positioned to change the phase of light in one leg (either the first leg 314 or the second leg 316), or may include multiple phase shifters (each of which may be independently controlled). In some instances, the controllable phase tuner 312 includes multiple phase shifters where at least one phase shifter is positioned to change the phase of light in the first leg 314 and at least one phase shifter is positioned to change the change the phase of light in the second leg 316. Additionally or alternatively, the controllable phase tuner 312 may include multiple phase tuners positioned to change the phase of light in one of the legs. For example, in the variation of the 1×2 controllable switch 300 shown in FIG. 3A, the controllable phase tuner 312 includes a first phase shifter 318 and a second phase shifter 320 that are each positioned to change the phase of light in the first leg 314, and a third phase shifter 322 that is positioned to change the phase of light in the second leg 316.

Including multiple phase shifters may allow for the controllable phase tuner 312 to split the tuning range (i.e., the range of phase shifting required to address the different output distributions across the measurement wavelengths for the 1×2 controllable switch 300) across multiple phase shifters. This may either increase the speed at which the controllable phase tuner 312 can adjust the phase difference and/or reduce losses associated with adjusting the phase difference. Additionally or alternatively, different phase shifters may be used to create a target phase difference at different times. Specifically, different types of phase shifters may have different tradeoffs of speed and optical losses (e.g., thermo-optic phase shifters are typically lossless but slower to change phase when compared to certain electrooptic phase shifters that have losses proportional to the amount of phase added), and thus different types of phase shifters may be utilized to balance speed and loss.

For example, a first phase shifter may initially provide a target amount of phase shift at a first level of loss. A second phase shifter may also be controlled to provide the target amount of phase shift at a lower level of loss than the first phase shifter, but is slower to achieve this phase shift. Once the first phase shifter is providing the target amount of phase shift, the first phase shifter may be controlled to reduce the phase shift it provides while the second phase shifter simultaneously increases the phase shift that is provides. The increase and decrease may be controlled to maintain the target amount of phase shift during this transition. As a result, the controllable switch may be able to quickly provide the target amount of phase shift, then gradually reduce the loss associated with providing the target amount of phase shift.

In other variations, a controllable switch includes a 2×2 controllable switch. For example, FIG. 3B shows a variation of a 2×2 controllable switch 324. The 2×2 controllable switch 324 is similar to the 1×2 controllable switch 300 described above with respect to FIG. 3A (with similar components labeled the same), except that instead of a single input 302 that feeds into a 1×2 coupler 308 and a 2×2 coupler 310, the 2×2 controllable switch 324 includes a first input 326 and a second input 328 that feeds into a first 2×2 coupler 330 and a second 2×2 coupler 332. As shown in FIG. 3B, the first 2×2 coupler 324 receives light from the first input 326 and/or the second input 328 as inputs, and uses the first leg 314 and the second leg 316 as outputs. Similarly, the second 2×2 coupler 332 receives light from the first leg 314 and second leg 316 as inputs and uses the first output 304 and the second output 306 as outputs.

Light received by either the first input 326 or the second input 328 of the 2×2 controllable switch 324 is split by the first 2×2 coupler 330 between the first leg 314 and the second leg 316. The second 2×2 coupler 332 receives the light from the first leg 314 and second leg 316, and couples the light to the first output 304 and/or second output 306 (as described in more detail with respect to FIG. 3A). The controllable phase tuner 312 (which is positioned between the first 2×2 coupler 330 and the second 2×2 coupler 332) may selectively adjust a phase difference between light in the first leg 314 and the second leg 316 as described above. While the adjustable phase tuner 312 is shown in FIG. 3B as having only a first phase shifter 318 positioned to change the phase of light in the first leg 314, it should be appreciated that the adjustable phase tuner 312 may be configured in any manner as described above with respect to the 1×2 controllable switch 300 of FIG. 3A. By adjusting the phase difference between the first leg 314 and the second leg 316, the 2×2 controllable switch 324 may take light received from one of its inputs (e.g., the first input 326 or the second input 328) and selectively route light entirely to the first output 304, entirely to the second output 306, or simultaneously to both the first output 304 and the second output 306 (i.e., split between the outputs according to a target splitting ratio).

In some instances, a controllable switch may also be configured to tap off a portion of light received by the controllable switch. This may be desirable in an instance where the multi-stage optical network switch is used to pass light to a wavelength locking unit as described above. FIG. 3C shows one such example of a 2×2 controllable switch 334. The 2×2 controllable switch 334 is configured the same as the 2×2 controllable switch 310 of FIG. 3A (with similar components labeled the same), except that the 2×2 controllable switch 334 includes a tap 336 (e.g., an optical waveguide tap) that extracts a portion of the light from a leg of the controllable switch 334 into a separate waveguide 338. The waveguide 338 may carry light to another portion of the optical measurement system (e.g., a wavelength locking unit as discussed herein). While shown as tapping light from a leg having a phase shifter (the first leg 314 in FIG. 3C), the tap 336 may alternatively tap light from a leg that does not include a phase shifter (the second leg 316 in FIG. 3C).

Placing a tap to extract light from a leg of a controllable switch may introduce a wavelength-dependent phase shift into that leg of the controllable switch. The controllable phase tuner 312 may be controlled to account for this wavelength-dependent phase shift depending on the wavelength of light currently passing through the controllable switch, but this may add complexity to the control scheme used to operate the controllable switch. To address this, in some variations a controllable switch may be configured to include two taps, such that each tap extracts a portion of light from a corresponding leg of the controllable switch.

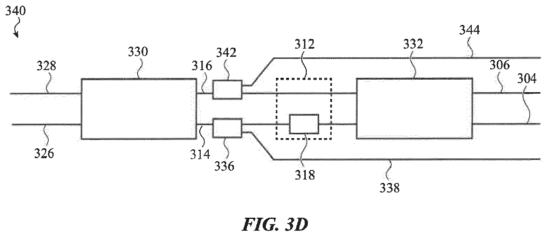

FIG. 3D shows one such example of a 2×2 controllable switch 340. The 2×2 controllable switch 340 is configured the same as the 2×2 controllable switch 334 of FIG. 3C (with similar components labeled the same), except that the 2×2 controllable switch 340 includes an additional tap 342 (e.g., an optical waveguide tap). The first tap 336 extracts a portion of the light traveling through the first leg 314 of the controllable switch 340 into a first separate waveguide 338, and the second tap 342 extracts a portion of the light traveling through the second leg 316 of the controllable switch 340 into a second separate waveguide 344. The first tap 336 and the second tap 342 may be configured to provide the same wavelength-dependent phase change in each of the first and second legs 314, 316. For example, in some instances the first tap 336 and the second tap 342 may be identical, such that these taps extract the same percentage of light from the first and second legs 314, 316, respectively, and introduce the same wavelength-dependent phase change to the first and second legs 314, 316.

The first and second waveguides 338, 344 may carry light to other portions of the optical measurement system (e.g., a wavelength locking unit as discussed herein). For example, in some variations the first tap 336 and second tap 342 route light to a single component, such as a wavelength locking unit. Depending on the design of the wavelength locking units, the first and second waveguides 338, 344 may form separate inputs to the wavelength locking unit, or may be multiplexed or otherwise combined to form a single input to the wavelength locking unit (e.g., the light from the first and second taps 336, 342 may be directed to a common detector of a wavelength locking unit such that the detector measures light collected from both the first and second taps 336, 342). In instances where light from the first and second waveguides 338, 344 are combined, it may be desirable for one or both of the waveguides to include a controllable phase tuner (such as described herein), which may be used to control the relative phase of light between the first and second waveguides 338, 344. In other variations, the first tap 336 and second tap 342 route light to different portions of the optical measurement system. For example, the first tap 336 may route light to a wavelength locking system, while the second tap 336 routes light to a second wavelength locking system or a different component (such as a portion of the optical measurement system that performs calibration, startup processes, or monitors system performance).

The number and arrangement of controllable switches in a multi-stage optical switch network depends at least in part based on the desired number of inputs and outputs of the multi-stage optical switch network. For example, FIG 4 shows a portion of a variation of optical measurement system 400 having a multi-stage optical switch network 402 having one input 401 and four outputs 403A-403D. As shown there, the optical measurement system 400 also comprises a light source unit 404 and a plurality of launch groups 406A-406D, each of which is optically connected to a corresponding output of the multi-stage optical switch network 402. Although not shown, the optical measurement system 400 may comprise any of the other components (e.g., a plurality of detector groups, a controller) of the optical measurement systems described above with respect to FIGS. 1A-2.

The light source unit 404 has a single output optically connected to the input 401 of the multi-stage optical switch network 402. The output of the light source unit 404 is not separately labeled in FIG. 4, and it should be appreciated that the optical measurement system 400 may optionally include additional components between the output and the input 401 of the multi-stage optical switch network 402 such as discussed above. In the variation of the light source unit 404 shown in FIG. 4, the light source unit 404 includes a plurality of light sources (labeled 408-1 to 408-N) connected to a multiplexer 410, which combines the outputs of the plurality of light sources into a common output (i.e., the output of the light source unit 404). Accordingly, the light source unit 404 may output light generated by any of the plurality of light sources 408-1 to 408-N to the multi-stage optical switch network 402. If each of the N light sources can emit at least wavelengths unique from the other light sources, the light source unit 404 can generate at least N different wavelengths of light.

The multi-stage optical switch network 402 includes a first stage 414 having a 1×2 controllable switch 416 and a second stage 418 having a first 1×2 controllable switch 420 and a second 1×2 controllable switch 422. The 1×2 controllable switch 416 of the first stage 414 receives light from input 401 (i.e., the input 401 of the multi-stage optical switch network 402 acts as the input to the 1×2 controllable switch 416), and outputs light to the second stage 418. Specifically a first waveguide 424 connects a first output of the 1×2 controllable switch 416 of the first stage 414 to the input of the first 1×2 controllable switch 420 of the second stage 418. Similarly, a second waveguide 426 connects a second output of the 1×2 controllable switch 416 of the first stage 414 to the input of the second 1×2 controllable switch 422 of the second stage 418. The outputs of the first 1×2 controllable switch 420 of the second stage 418 form a first output 403A and a second output 403B of the multi-stage optical switch network 402, and the outputs of the second 1×2 controllable switch 422 of the second stage 418 form a third output 403C and a second output 403D of the multi-stage optical switch network 402. In some instances, one or more of the 1×2 controllable switches comprises a tap or set of taps (not shown) such as described with respect to FIGS. 3C and 3D, which may be used to tap off a portion of the light received by the multi-stage optical switch network 402 (e.g., for wavelength stabilization/locking as discussed above). If the 1×2 controllable switch 416 of the first stage includes the tap, the tap will be able to receive light generated by the light source unit 404 regardless of how the multi-stage optical switch network 402 is configured to route light to its outputs 403A-403D.

The multi-stage optical switch network 402 depicted in FIG. 4 has four potential output configurations, and may be controlled to selectively route light to either one, two, three, or four of the outputs 403A-403D (and the associated launch groups 406A-406D) simultaneously. For example, to route light from the input 401 to only the first output 403A and the first launch group 406A (i.e., at an output configuration of 1 simultaneous output), the 1×2 controllable switch 416 of the first stage 414 is controlled to route the input light only to the first waveguide 424 (and thus only to the first 1×2 controllable switch 420 of the second stage 418). The first 1×2 controllable switch 420 of the second stage 418 is similarly controlled to route the light it receives only to the first output 403A. The multi-stage optical switch network may similarly be controlled to selectively route light at an output configuration of 1 simultaneous ouptut, but to a different set of outputs (only to the second output 403B, only to the third output 403C, or only to the fourth output 403D) and thus to a different respective set of launch groups (only to the second launch group 406B, only to the third launch group 406C, or only to the fourth launch group 406D)

To route input light to all four outputs 403A-403D and all four launch groups 406A-406D simultaneously (i.e., at an output configuration of 4 simultaneous outputs), the 1×2 controllable switch 416 of the first stage 414 is controlled to split the input light between the first waveguide 424 and the second waveguide 426. The first 1×2 controllable switch 420 of the second stage 418 is controlled to split the light it receives (i.e., via the first waveguide 424) between the first output 403A and the second output 403B. Similarly, the second 1×2 controllable switch 422 of the second stage 418 is controlled to split the light it receives (i.e., via the second waveguide 426) between the third output 403C and the fourth output 403D. If all of the controllable switches evenly split light between their outputs, then all four outputs 403A-403D (and thus all four launch groups 406A-406D) may receive an equal amount of light (though it should be appreciated that different splitting ratios may be used to create an uneven distribution of light between the four outputs 403A-403D and corresponding launch groups 406A-406D). Similar principles may be applied to selectively route light to two or three of the outputs 403A-403D simultaneously (i.e., at an output configuration of 2 or 3 simultaneous outputs, respectively).

FIG. 5 shows another variation of an optical measurement system 500 that includes a multi-stage optical switch network 502 having two inputs 501A, 501B and four outputs 503A-503D. As shown there, the optical measurement system 500 also comprises a light source unit 504 and a plurality of launch groups 506A-506D, each of which is optically connected to a corresponding output 503A-503D, respectively, of the multi-stage optical switch network 502. Although not shown, the optical measurement system 500 may comprise any of the other components (e.g., a plurality of detector groups, a controller) of the optical measurement systems described above with respect to FIGS. 1A-2.

The light source unit 504 has two outputs optically connected to the inputs of the multi-stage optical switch network 502. Specifically, the first light source unit 504 has a first output optically connected to a first input 501A of the multi-stage optical switch network 502 and a second output optically connected to a second input 501B of the multi-stage optical switch network 502. The first and second outputs of the light source unit 504 are not separately labeled in FIG. 5, and it should be appreciated that the optical measurement system 500 may optionally include additional components between any output of the light source unit 504 and its corresponding input of the multi-stage optical switch network 502, such as discussed above.

The light source unit 504 has one or more light sources optically connected to each of its outputs. In the variation of the light source unit 504 shown in FIG. 5, the light source unit 504 includes a first plurality of light sources 508-1 - 508-N connected to a first multiplexer 510 and a second plurality of light sources 512-1 - 512-M connected to a second multiplexer 514. The first multiplexer 510 combines the outputs of the first plurality of light sources into a first common output (i.e., the first output of the light source unit 504) and the second multiplexer 514 combines the outputs of the second plurality of light sources into a second common output (i.e., the second output of the light source unit 504). Accordingly, the light source unit 504 may output light from any of the first plurality and second plurality of light sources to the multi-stage optical switch network 502. If each of the N light sources of the first plurality of light sources and the M light sources of the second plurality of light sources can emit at least one wavelength unique relative to the other light sources, the light source unit 504 can generate at least N+M different wavelengths of light. Splitting the light sources between different multiplexers may allow the light source unit to generate a wider range of wavelengths while reducing optical losses associated with multiplexing the light sources.

The multi-stage optical switch network 502 includes a first stage 515 having a 2×2 controllable switch 516 and a second stage 518 having a first 1×2 controllable switch 520 and a second 1×2 controllable switch 522. The first input 501A and the second input 501B of the multi-stage optical switch network 502 act as inputs to the 2×2 controllable switch 516. Accordingly, the 2×2 controllable switch 516 can receive light from either input and route light to the second stage 518. Specifically a first waveguide 524 connects a first output of the 2×2 controllable switch 516 to the input of the first 1×2 controllable switch 520 of the second stage 518. Similarly, a second waveguide 526 connects a second output of the 2×2 controllable switch 516 to the input of the second 1×2 controllable switch 522 of the second stage 518. The outputs of the first 1×2 controllable switch 520 of the second stage 518 form a first output 503A and a second output 503B of the multi-stage optical switch network 502, and the outputs of the second 1×2 controllable switch 522 of the second stage 518 form a third output 503C and a second output 503D of the multi-stage optical switch network 502.

In some instances, one or more of the controllable switches of the multi-stage optical switch network 502 includes a tap such as described with respect to FIG. 3C. For example, in the variation shown in FIG. 5, the 2×2 controllable switch 516 comprises a tap 528. The tap 528 may tap off a portion of the light received by the 2×2 controllable switch 516 as discussed above, and may route this light to a wavelength locking unit 530 such as discussed herein. Because all light entering the multi-stage optical switch network 502 passes through the 2×2 controllable switch 516, the tap 528 may allow the optical measurement system 500 to stabilize any wavelength of light generated by the light source unit 504 and received by the multi-stage optical switch network 502 using the wavelength locking unit 530.

It should be appreciated that in other instances, the 2×2 controllable switch 516 comprises multiple taps, such as described herein with respect to FIG. 3D. In these instances, the 2×2 controllable switch 516 includes a second tap 538, such that the taps 528, 538 extract light from different legs of the 2×2 controllable switch 516. The second tap 538 may route light from the 2×2 controllable switch 516 to a second wavelength locking unit 540, as shown in FIG. 5, to the first wavelength locking unit 530, or to still another component such as described herein.

The multi-stage optical switch network 502 has four potential output configurations, and may be controlled to take light received by either the first input 501A or the second input 501B and selectively route light to one, two, three, or four of the outputs 503A-503D (and the associated launch groups 506A-506D) simultaneously. For example, to route light from the first input 501A to only the first output 503A and the first launch group 506A, the 2×2 controllable switch 516 is controlled to route light it receives from the first input 501A only to the first waveguide 524. The first 1×2 controllable switch 520 of the second stage 518 is similarly controlled to route the light it receives only to the first output 503A. To route light instead from the second input 501B, the 2×2 controllable switch 516 can be switched to instead route light it receives from the second input 501B only to the first waveguide 524. In this way, the multi-stage output switch network 502 can take light from any light source from the light source unit 504 and route it (either from via the first input 501A or the second input 501B) to a target set of outputs and corresponding launch groups at an output configuration of 1 simultaneous (either the first output 503A and first launch group 506A, second output 503B and second launch group 506B, third output 503C and third launch group 506C, or the fourth output 503D and fourth launch group 506D).

To route light received from the light source unit 504 to all four outputs 503A-503D and all four launch groups 506A-506D simultaneously (i.e., at an output configuration of 4 simultaneous outputs), the 2×2 controllable switch 516 is controlled to split light received from one input (either the first input 501A or the second input 501B) simultaneously between the first waveguide 524 and the second waveguide 526. The first 1×2 controllable switch 520 of the second stage 518 is controlled to split the light it receives (i.e., via the first waveguide 524) between the first output 503A and the second output 503B (and thus the first launch group 506A and the second launch group 506B) simultaneously. Similarly, the second 1×2 controllable switch 522 of the second stage 518 is controlled to split the light it receives (i.e., via the second waveguide 526) between the third output 503C and the fourth output 503D (and thus the third launch group 506C and the fourth launch group 506D) simultaneously. If all of the controllable switches evenly split light between their outputs, then all four outputs 503A-503D (and all four launch groups 506A-506D) may receive an equal amount of light (though it should be appreciated that different splitting ratios may be used to create an uneven distribution of light between the four outputs 503A-503D). Similar principles may be applied to selectively route light simultaneously to two or three of the outputs 503A-503D (i.e., at an output configuration of 2 or 3 simultaneous outputs, respectively).

FIG. 6 shows yet another variation of an optical measurement system 600 that includes a multi-stage optical switch network 602 having four inputs 601A-601D and four outputs 603A-603D. As shown there, the optical measurement system 600 also comprises a light source unit 604 and a plurality of launch groups 606A-606D, each of which is optically connected to a corresponding output of the multi-stage optical switch network 602. Although not shown, the optical measurement system 600 may comprise any of the other components (e.g., a plurality of detector groups, a controller) of the optical measurement systems described above with respect to FIGS. 1A-2.

The light source unit 604 has four outputs optically connected to the inputs of the multi-stage optical switch network 602. Specifically, the first light source unit 604 has a first output optically connected to a first input 601A of the multi-stage optical switch network 602, a second output optically connected to a second input 601B, a third output optically connected to a third input 601C, and a fourth output optically connected to a fourth input 601D. The outputs of the light source unit 604 are not separately labeled in FIG. 6, and it should be appreciated that the optical measurement system 600 may optionally include additional components between any output of the light source unit 604 and its corresponding input of the multi-stage optical switch network 602 such as discussed above.

The light source unit 604 has one or more light sources optically connected to each of its outputs. In the variation of the light source unit 604 shown in FIG. 6, the light source unit 604 includes a first plurality of light sources 608-1 - 608-N connected to a first multiplexer 610, a second plurality of light sources 612-1 - 612-M connected to a second multiplexer 614, a third plurality of light sources 616-1 - 616-P connected to a third multiplexer 618, and a fourth plurality of light sources 620-1 - 620-Q connected to a fourth multiplexer 621. Each of these multiplexers combines the outputs of its associated plurality of light sources into a common output (collectively forming the four outputs of the light source unit 604). Accordingly, the light source unit 604 may output light from any of the four pluralities of light sources. If each of the light sources from the four pluralities of light sources can emit light at least one wavelength unique relative to the other light sources, the light source unit 604 can generate at least N+M+P+Q different wavelengths of light. Splitting the light sources between different multiplexers may allow the light source unit to generate a wider range of wavelengths while reducing optical losses associated with multiplexing the light sources.

The multi-stage optical switch network 602 includes a first stage 622 having a first 2×2 controllable switch 624 and a second 2×2 controllable switch 626 and a second stage 628 having a first 2×2 controllable switch 630 and a second 2×2 controllable switch 632. Each of these controllable switches has two inputs and two outputs, and can selectively route light received by one of the inputs to either output or both of the outputs simultaneously as discussed above. The first input 601A and the second input 601B of the multi-stage optical switch network 602 act as inputs to the first 2×2 controllable switch 624 of the first stage 622. Similarly, the third input 601C and the fourth input 601D of the multi-stage optical switch network 602 act as inputs to the second 2×2 controllable switch 626 of the first stage 622. Accordingly, each input of the multi-stage optical switch network 602 is routed to either the first 2×2 controllable switch 624 or the second 2×2 controllable switch 626 of the first stage 622.

Each of the controllable switches of the first stage 622 route light to one or both of the controllable switches of the second stage 628. Specifically a first waveguide 634 connects a first output of the first 2×2 controllable switch 624 of the first stage 622 to a first input of the first 2×2 controllable switch 630 of the second stage 628. A second waveguide 636 connects a second output of the first 2×2 controllable switch 624 of the first stage 622 to a first output of the second 2×2 controllable switch 632 of the second stage 628. Similarly, a third waveguide 638 connects a first output of the second 2×2 controllable switch 626 of the first stage 622 to a second input of the first 2×2 controllable switch 630 of the second stage 628. A fourth waveguide 640 connects a second output of the second 2×2 controllable switch 626 of the first stage 622 to a second output of the second 2×2 controllable switch 632 of the second stage 628. The outputs of the first 2×2 controllable switch 630 of the second stage 628 form the first output 603A and the second output 603B of the multi-stage optical switch network 602, and the outputs of the second 2×2 controllable switch 632 of the second stage 628 form the third output 603C and the fourth output 603D of the multi-stage optical switch network 602.

In some instances, one or more of the controllable switches of the multi-stage optical switch network 602 includes a tap such as described with respect to FIG. 3C. For example, in the variation shown in FIG. 6, the first 2×2 controllable switch 624 of the first stage 622 includes a first tap 642 and the second 2×2 controllable switch 626 of the first stage 622 includes a second tap 644. The first tap 642 taps off a portion of the light received by the first 2×2 controllable switch 624 of the first stage 622 (e.g., from a light source of the first plurality of light sources or the second plurality of light sources), and may route this light to a first wavelength locking unit 646 such as discussed above. Similarly, the second tap 644 taps off a portion of the light received by the second 2×2 controllable switch 626 of the first stage 622 (e.g., from a light source of the third plurality of light sources or the fourth plurality of light sources), and may route this light to a second wavelength locking unit 648. While the optical measurement system 600 is shown in FIG. 6 as having two separate wavelength locking units, in other variations the first tap 642 and second tap 644 route light to a single wavelength locking unit (e.g., light from the first tap 642 and second tap 644 may be multiplexed into a single waveguide). Because all light entering the multi-stage optical switch network 602 passes through either of the controllable switches of the first stage, the first tap 642 and second tap 644 collectively may allow the optical measurement system 600 to stabilize any wavelength generated by the light source unit 604 and received by the multi-stage optical switch network 602. It should be appreciated that either or both of the first and second 2×2 controllable switches 624, 626 may include an additional tap, such as described herein with respect to FIG. 3D.

The multi-stage optical switch network 602 has four potential output configurations, and may be controlled to take light received by any input of the four inputs 601A-601D and route it simultaneously to one, two, three, or four of the outputs 603A-603D (and their associated launch groups 606A-606D). For example, to route light from either the first input 601A or the second input 601B to only the first output 603A and first launch group 606A (i.e., at an output configuration of 1 simultaneous output), the first 2×2 controllable switch 624 of the first stage 622 is controlled to route light it receives to the selected input only to the first waveguide 634. The first 2×2 controllable switch 630 of the second stage 628 is similarly controlled to route the light it receives from the first waveguide 634 only to the first output 603A (and thus to the first launch group 606A). To route light instead from either the third input 601C or the fourth input 601D, the second 2×2 controllable switch 626 of the first stage 622 is controlled to route light it receives at that input only to the third waveguide 638. The first 2×2 controllable switch 630 of the second stage 628 is controlled so that it routes the light it receives from the third waveguide 638 only to the first output 603A. In this way, the multi-stage output switch network 602 can take light from any light source from the light source unit 604 and route it to the first output 603A and the first launch group 606A. The multi-stage optical switch network 602 may also be controlled to route light from any light source of the light source unit 604 to any other set of outputs and corresponding set of launch groups at an output configuration of 1 simultaneous output (either the second output 603B and the second launch group 6o6B, third output 603C, or the fourth output 603D. Similar principles may be applied to selectively route light simultaneously to a set of outputs including two, three, or four of the outputs 603A-603D (i.e., at output configurations of 2, 3, or 4 simultaneous outputs).

For the multi-stage optical switch networks described herein, how the individual controllable switches are controlled will depend on which inputs and outputs of the multi-stage optical switch network will respectively receive and output light, and what wavelength of light is received by the multi-stage optical switch network. Accordingly, the control of the switches will be modified as any of these parameters changes to achieve the desired output. Each controllable switch will have its own default splitting behavior (i.e., when it is not actively being controlled), and thus the multi-stage optical switch network will have its own default routing configuration based on the default behavior of its controllable switches. The controllable switches may be designed to achieve a desired routing configuration for the multi-stage optical switch network. For example, in some instances the default switching behaviors of the controllable switches are selected to minimize the average loss associated with controlling the multi-stage optical switch network to route each of wavelengths of the measurement wavelengths during a predetermined measurement sequence. In other instances, it may be desirable to minimize the average time it takes to change the multi-stage optical switch network from its default routing configuration to another set of routing configurations (which may be a subset of the full range of routing configurations used during a predetermined measurement sequence).

It should be appreciated that the principles of the multi-stage optical switch networks described above may be extended to provide a network that routes any combination of numbers of inputs and outputs. As the number of inputs and/or outputs increase, the multi-stage optical switch network may include additional stages and/or controllable switches within each stage to provide the different possible routing pathways between each input and the multiple outputs. For example, to accommodate more than four inputs and/or more than four outputs, the multi-stage optical switch network may be configured to include three or more stages, and at least one of the stages may include at least three controllable switches. Accordingly, these multi-stage optical switch networks may be used with a wide range of possible optical measurement system designs to achieve a range of different output configurations.

As mentioned above, the optical measurement systems described herein can be used to measure one or more properties of a sample. Specifically, the optical measurement system may perform a measurement sequence to generate a plurality of output signals that may be used to determine the one or more properties of the sample. These measurement sequences may be repeated, with the plurality of output signals associated with successive measurement sequences being used either collectively to determine the one or more properties of the sample or used to perform a successive determination of one or more properties of the sample at a later point in time. One or more parameters of the measurement sequence may be updated before performing a successive measurement sequence, as discussed in more detail below.

Each measurement sequence comprises a plurality of individual measurements that each generate at least one output signal (that collectively form the plurality of output signals of the measurement sequence). Each individual measurement is performed at a corresponding wavelength (i.e., light is generated and emitted from an optical measurement system at the corresponding wavelength during a portion of the individual measurement), such that at least one individual measurement is performed for each of a plurality of wavelengths. The results of the individual measurements of the measurement sequence (i.e., the plurality of output signals) are used to derive one or more properties of the sample (e.g., using spectroscopic analysis techniques). The optical measurement systems may facilitate a wide range of analytical techniques as would be readily understood by one of ordinary skill in the art, and thus individual techniques for deriving properties from a sample using measurements taken at a plurality of different wavelengths will not be discussed herein.

FIG. 7 depicts a method 700 of performing a measurement sequence using a plurality of different wavelengths. This method 700 may be performed by any of the optical measurement systems described herein. Initially, the method 700 includes selecting a plurality of wavelengths at step 702. The plurality of wavelengths will be the wavelengths used to measure the sample, and may be selected depending on the anticipated sample that will be measured as well as the desired property or properties to be determined from the sample. For example, when an optical measurement system having a light source unit as described above is used to perform the measurement sequence, the plurality of wavelengths may be a subset of the wavelengths that the light source unit is capable of generating. Different subsets of these wavelengths may be selected for different measurement scenarios. In some instances, selecting the plurality of wavelengths includes performing a set of preliminary measurements (e.g., using one or more wavelengths) to generate a set of preliminary output signals, and selecting the plurality of wavelengths using the set of preliminary output signals. For example, the preliminary measurements may allow for an initial characterization or estimate of certain characteristics of the sample, which may be used in selecting the plurality of wavelengths.

Once the plurality of wavelengths has been selected, the plurality of wavelengths is divided into a plurality of groups at step 704. Each group (and thus each wavelength within that group) is associated with a different corresponding output configuration. The number of groups may depend on how many different output configurations is desired for the measurement sequence, and need not utilize every output configuration that can be achieved by a given optical measurement system. For example, in instances where an optical measurement system has four launch groups, the plurality of wavelengths may be divided into either two, three, or four different groups each associated with a different corresponding output configuration. In some instances, the assignment of a given wavelength to a group may be based on which noise source is anticipated to limit the SNR for an individual measurement taken at that wavelength.

For example, in some instances it may be desirable to maximize the SNR for measurements taken at each wavelength. Certain wavelengths may be limited by fundamental noise regardless of the output configuration. These wavelengths may be assigned to the group having the finest output configuration (i.e., where light is split across the fewest number of launch groups), which may in turn improve the SNR at these wavelengths. As a non-limiting example, these wavelengths may be assigned to a group having an output configuration of 1 simultaneous output, such that only one launch group receives light at a time and receives all of the light generated by a given light source (minus any losses associated with the optical measurement system).

Conversely, other wavelengths may be limited by a different noise source (e.g., coherent noise) regardless of the output configuration of the measurement. These wavelengths may be assigned to a group with the coarsest output configuration (i.e., where light is split across the most launch groups simultaneously), which may save time and power as compared to performing separate measurements at a higher output configuration (i.e., a larger number of simultaneous outputs). As a non-limiting example, these wavelengths may be assigned to a group having an output configuration of 4 simultaneous outputs. Each launch group receives less light than it would for a measurement at that launch group having an output configuration of 1 simultaneous output, but may still result in a comparable SNR. By splitting the light between multiple launch groups simultaneously, such a measurement reduces the time required to measure all of the launch groups and save power as compared to multiple measurements for a finer output configuration.

Still other wavelengths may be limited by fundamental noise at some output configurations, but may be limited by other noise sources (e.g., coherent noise) at other output configurations. These wavelengths may be assigned to a group corresponding to an output configuration where a measurement would no longer be limited by fundamental noise. For example, a wavelength may be limited by fundamental noise for measurements taken at an output configuration of 4 simultaneous outputs, but is instead limited by fundamental noise for measurements taken with an output configuration of 2 simultaneous outputs. In these instances, it may be desirable to assign the wavelength to a group corresponding to an output configuration of 2 simultaneous outputs (which may still save time and power compared to individual measurements with an output configuration of 1 simultaneous outputs). It should be appreciated that is just an illustrative example, and that the wavelengths may be assigned to different groups to achieve any desired tradeoff of SNR, power consumption, and time requirements to perform the measurements described herein.

In some instances, each wavelength of the plurality of wavelengths has a default group (of the plurality of groups) to which it is assigned for a given measurement sequence. In some instances, one or more parameters associated with the sample may be used in dividing the plurality of wavelengths into the plurality of groups (which may result in deviations from the default behavior). For example, certain characteristics of the sample (e.g., a scattering coefficient or an absorption coefficient, a material type of the sample) may be used in dividing the wavelengths. In some instances, this information may be known in advance (e.g., is manually entered prior to measuring the sample, or is saved from a previous measurement of the same sample).

Additionally or alternatively, a set of preliminary measurements may be used to generate a corresponding set of output signals that is used in dividing the plurality of wavelengths into the plurality of groups. In instances where a set of preliminary measurements (the "first set of preliminary measurements") is performed as part of selecting the plurality of wavelengths, the set of preliminary amendments used to divide the plurality of wavelengths (the "second set of preliminary measurements") may include some or all of the first set of preliminary measurements. Additionally or alternatively, the second set of preliminary measurements includes one or more additional preliminary measurements. For example, the output signals of the preliminary measurements may be used to determine a metric of the optical power (i.e., the signal strength) at one or more detectors of a detector group (or groups) associated with a launch group (or groups). The metric of this optical power (e.g., the optical power measured by a single detector, an average or other combination of optical powers measured by multiple different detectors) may be used in determining which of the plurality of groups the wavelength is assigned to. For example, if this metric is below a predetermined threshold for a given wavelength, that wavelength may be assigned to a group having a finer output configuration than its default group. It should be appreciated that each wavelength measured using a preliminary measurement (which collectively may only be a subset of the plurality of wavelengths) may have its own set of thresholds for determining which group that wavelength should be assigned to.

For each wavelength of the plurality of wavelengths, the method 700 includes performing a set of individual measurements of the sample at step 706 for each wavelength in the plurality of wavelengths, where each set of individual measurements is performed at the output configuration corresponding to the wavelength. A corresponding set of output signals is generated for each set of individual measurements, and thus the measurement sequence generates a plurality of sets of output signals made up of these corresponding sets of output signals.

As an example, the plurality of groups of wavelengths includes a first group associated with a first output configuration and a second group associated with a second output configuration. For each wavelength in the first group, a corresponding set of measurements is performed at the first output configuration (e.g., a first set of measurements of the sample is performed for a first wavelength in the first group). This includes generating light at the wavelength (e.g., the first wavelength), emitting the generated light from a corresponding set of launch groups selected from the plurality of launch groups (the corresponding set having a first number of launch groups corresponding to the first output configuration), and measuring return light received during emission of the generated light using a corresponding set of detector groups selected from a plurality of detector groups (the corresponding set having the first number of detector groups).

Similarly, for each wavelength in the second group, a corresponding set of measurements is performed at the first output configuration (e.g., a second set of measurements of the sample is performed for a second wavelength in the second group). This includes generating light at the wavelength (e.g., the second wavelength), emitting the generated light from a corresponding set of launch groups selected from the plurality of launch groups (the corresponding set having a second number of launch groups corresponding to the second output configuration), and measuring return light received during emission of the generated light using a corresponding set of detector groups selected from the plurality of detector groups (the corresponding set having the second number of detector groups).

In some instances, the set of individual measurements comprises multiple measurements having different corresponding sets of launch groups and different corresponding sets of detectors. In the example discussed immediately above, the first set of measurements taken at the first wavelength may include multiple measurements, each having a different unique set of launch groups (while still maintaining the first output configuration). Similarly, since each launch group is associated with a corresponding detector group, the multiple measurements each may use a different unique set of detector groups.

Additionally or alternatively, the set of individual measurements for a wavelength collectively performs at least one measurement using each launch group. Specifically, performing an individual measurement at a given output configuration includes emitting light from a number of launch groups (and the launch sites associated with these launch groups) toward a sample, where the number of launch groups corresponds to the given output configuration. For example, if an optical measurement system has four launch groups, the set of individual measurements for a wavelength may include a single individual measurement if light is split between all four launch groups simultaneously. A set of individual measurements for another wavelength may include two individual measurements if light is split simultaneously between two launch groups or simultaneously between three launch groups. A set of individual measurements for yet another wavelength may include four individual measurements if light is sent to only one launch group at a time (i.e., one measurement for each launch group). In this way, a measurement sequence may ensure that each of the plurality of launch groups is used to measure all of the plurality of wavelengths.

In some of these variations, the set of individual measurements for a given wavelength may optionally include a separate measurement for every unique set of launch groups that has the corresponding output configuration (i.e., each of the possible sub-configurations of the output configuration). For example, when an optical measurement system has four launch groups, there is one unique set of launch groups in which light is simultaneously split between all four launch groups (i.e., an output configuration of four simultaneous outputs), six unique sets of launch groups in which light is simultaneously split between two launch groups (i.e., an output configuration of two simultaneous outputs), four unique sets of launch groups in which light is simultaneously split between three launch groups (i.e., an output configuration of three simultaneous outputs), and four unique sets of launch groups in which light is routed only to a single launch group (i.e., an output configuration of one simultaneous output). In other words, these output configurations have one, six, four, and four sub-configurations, respectively.

While light is being emitted by the launch group (or groups) for a given individual measurement, the detector group (or groups) corresponding to the launch group measure light received by their associated detectors. Each detector may provide its own output signal, and thus a given individual measurement will produce one or more output signals (i.e., the outputs of the detector(s) of the detector group(s) used during that measurement). Because the measurement sequence performs a set of individual measurements for each wavelength, the method will generate a set of output signals for each wavelength. Additionally, in variations where the measurement sequence measures each wavelength at every launch group, the method will accordingly generate a set of output signals corresponding to every launch group for each wavelength. At step 708 one or more properties of a sample may be determined using the results of the measurement sequence (i.e., using the plurality of sets of output signals resulting from the sets of individual measurements).

In some instances, such as shown in step 710, the method may optionally update the plurality of groups to reassign at least one wavelength to a different group (and thereby associate the reassigned wavelength(s) to a different output configuration prior to performing a subsequent measurement sequence. For example, for a given wavelength, the set of output signals resulting from the set of individual measurements performed at that wavelength may be analyzed to determine whether the wavelength should be assigned to a different group with a different output configuration. For example, if a metric of optical power derived from one or more of the output signals satisfies certain predetermined criteria for that wavelength (e.g., is above a threshold, below a threshold), the wavelength may be assigned to a different default group for future measurement sequences. This may allow an optical measurement system to adjust its measurement techniques for a range of samples having a range of different properties, such as when measurements at one wavelength are expected to be limited by fundamental noise but are actually limited by coherent noise.

While the method 700 described immediately above discusses performing a measuring sequence that includes a set of individual measurements for each wavelength of a plurality of wavelengths, it should be appreciated that the various individual measurements may be performed in any suitable order. In some instances, it may be desirable to divide the measurement sequences into a plurality of subsequences, where each subsequence includes performing successive measurements at a common wavelength of the plurality of wavelengths. In other words, the individual measurements are grouped by wavelength, such that all of the measurements of a set of individual measurements for a wavelength are performed sequentially before starting measurements using another wavelength.

In other instances, it may be desirable to group measurements by launch group set. Each subsequence of the plurality of subsequences includes successive measurements performed for different wavelengths for the same set of launch groups. Each subsequence has a corresponding set of wavelengths of the plurality of wavelengths (i.e., the set of wavelengths from the group that is used to measure that set of launch groups). In other words, all measurements for a given set of launch groups (and thus at a given output configuration or sub-configuration thereof) are performed before moving to another set of launch groups (which may include a different output configuration or a different sub-configuration). This may be desirable in instances where it is faster to switch between wavelengths than it is to switch between launch groups.

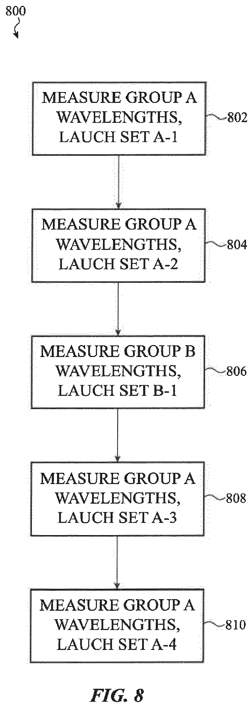

FIG. 8 shows one such measurement sequence 800. For the purpose of illustration the plurality of wavelengths is divided into two groups, and is performed using an optical measurement system having four launch groups. The first group ("Group A") has an output configuration of 1 simultaneous output, such that individual measurements taken with these wavelengths are routed to a single launch group. In the variation shown in FIG. 8, the set of individual measurements for each wavelength in Group A includes four total measurements: one measurement for each launch group (labeled "Launch Set A-1" to "Launch Set A-4"). The second group ("Group B") has an output configuration of 4 simultaneous outputs, such that individual measurements taken with these wavelengths are split simultaneously between all four outputs ("Launch Set B-1").

The measurement sequence shown there is separated by launch group, such that at step 802 a first subsequence is performed that includes individual measurements taken at a first launch group (Launch Set A-1) for each wavelength in Group A. At step 804, a second subsequence is performed that includes individual measurements taken at a second launch group (Launch Set A-2) for each wavelength in Group A. At step 806, a third subsequence is performed that includes individual measurements at each wavelength in Group B, in which light is split between the four launch groups (Launch Set B-1). At step 808, a fourth subsequence is performed that includes individual measurements taken at a third launch group (Launch Set A-3) for each wavelength in Group A. Finally, at step 810, a fifth subsequence is performed that includes individual measurements taken at a fourth launch group (Launch Set A-4) for each wavelength in Group A. Collectively, the first through fifth subsequences perform all of the measurements of the measurement sequence, including four individual measurements for each wavelength in Group A and one individual measurement for each wavelength in Group B. It should be appreciated that the order of these subsequences is for illustration only, and that the number and order of subsequences may be at least partially determined by the number of groups and how many unique sets of launch groups are measured for each group.

As mentioned above, individual measurements include emitting light from a set of launch groups at a predetermined output configuration, and measuring light using a set of detector groups corresponding to the set of launch groups to generate a set of output signals. It should be appreciated that there may be additional steps associated with an individual measurement. For example, when a multi-stage optical switch network is used to route light of a given wavelength to a particular set of launch groups (e.g., each of the first set of measurements at the first wavelength discussed above), the individual measurement may comprise a setting step in which the multi-stage optical switch network is reconfigured for that routing operation. Additionally or alternatively, a wavelength locking step may be used to set and stabilize the wavelength of light emitted before measuring light with the detector groups. Additionally or alternatively, the individual measurement may include a background measurement, in which background light is measured by one or more detector groups while the launch groups are not concurrently emitting light (e.g., prior to emission of the generated light). These background measurements may allow for measurement corrections to account for detector dark current, stray light, and/or ambient light present during the sample measurement.

Any of the optical measurement systems described herein may be used to perform the measurement sequences described above with respect to FIGS. 7 and 8. In these instances, a light source unit may be used to generate each of the plurality of wavelengths, and provide that light to a multi-stage optical switch network via one or more outputs of the light source unit. For each individual measurement, the multi-stage optical switch network is controlled to route light of the generated wavelength between one of its inputs (corresponding to the output of the light source unit that is outputting light) to the selected launch groups. The detector groups associated with the selected launch groups measure the light during the measurements, and generate the output signals that are used to determine the one or more properties of the sample being measured.

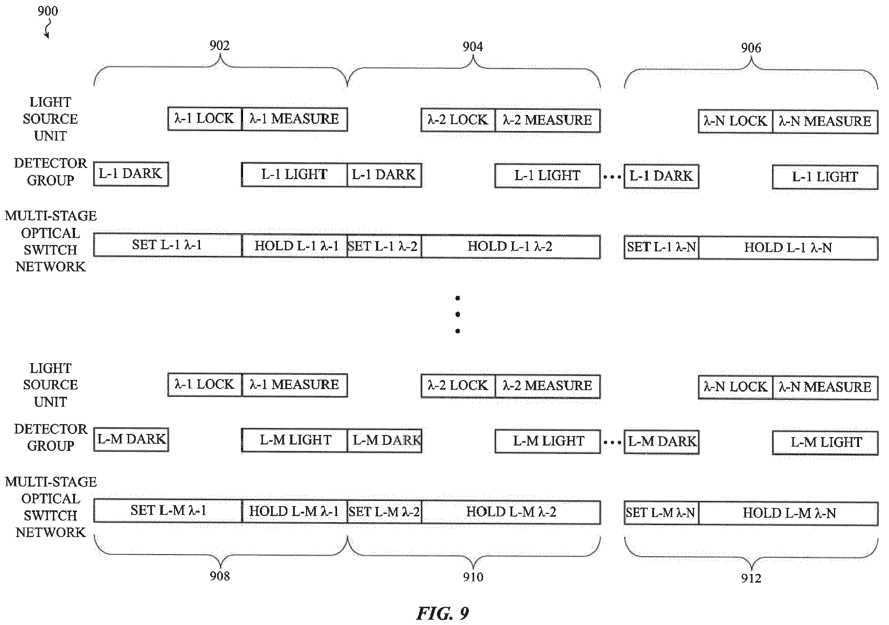

FIG. 9 depicts a timing diagram of a portion of a measurement sequence 900 and exemplary steps associated with the individual measurements of the measurement sequence 900. The measurement sequence 900 may be performed using an optical measurement system including a light source unit, a plurality of detector groups, and a multi-stage optical switch network that selectively routes light to a plurality of launch groups, such as discussed in more detail above. In the variation shown in FIG. 9, the portion of the measurement sequence 900 involves a group of N wavelengths, each of which is measured individually at M different sets of launch groups (e.g., M different subsequences of N individual measurements). FIG. 9 depicts a subset of these measurements, including a first individual measurement 902 in which a first wavelength ("λ-1") is measured for a first set of launch groups ("L-1"), a second individual measurement 904 in which a second wavelength ("λ-2") is measured for the first set of launch groups, and a third individual measurement 906 in which the Nth wavelength ("λ-1") is measured for the first set of launch groups. Similarly, FIG. 9 depicts a fourth individual measurement go8 in which the first wavelength is measured for the Mth set of launch groups ("L-M"), a fifth individual measurement 910 in which the first wavelength is measured for the Mth set of launch groups, and a sixth individual measurement 912 in which the Nth wavelength is measured for the Mth set of launch groups.

Using the first individual measurement 902 as an example, each individual measurement includes a setting step (labeled "SET L-1 λ-1" for measurement 902). During this step, the multi-stage optical switch network is configured (i.e., by controlling the individual switches of the multi-stage optical switch network) to route the wavelength of light (i.e., λ-1) from the network's input corresponding to that wavelength to the output or outputs corresponding to the selected set of launch groups (i.e., the first set of launch groups L-1). It should be appreciated the time required to set the multi-stage optical switch network to a desired routing configuration may depend on the previous routing configuration. As mentioned above, in some instances it may be faster to adjust a multi-stage optical switch network to account for a new wavelength (while maintaining the same set of launch groups) than it is to switch between different sets of launch groups, such as indicated by a shorter setting step (labeled "SET L-1 λ-2" for measurement 904) in the second individual measurement 904. Once the setting step is complete, the multi-stage optical switch network can be maintained in the routing configuration (labeled as "HOLD L-1 λ-1" for measurement 902) during measurement of the sample.

During measurement of the sample, the light source unit will generate light at the wavelength for that measurement (i.e., λ-1), which is labeled as "λ-1 MEASURE" for measurement 902. Since wavelength shifts in the generated light may negatively impact the accuracy of the measurement, it may be desirable to make sure the light source unit has achieved a threshold level of wavelength accuracy before measuring the sample. Accordingly, prior to measuring the sample, the individual measurement may include a wavelength locking step (labeled "λ-1 LOCK" for measurement 902). During the wavelength locking step, the light source unit generates the light and tunes the wavelength (e.g., via a wavelength locking unit as described above) until the desired wavelength (i.e., λ-1) is achieved (and in some instances, has a threshold level of stability). It should be appreciated that the wavelength locking step may be performed at any suitable time relative to the setting step for the multi-stage optical switch network. In some instances, however, it is desirable for the wavelength locking step and the setting step to occur at least partially concurrently, which may save time by allowing the wavelength locking and setting to occur simultaneously.

While the light source unit is generating light (i.e., during the λ-1 MEASURE step) and the multi-stage optical switch network is configured to output the generated light to the desired set of launch groups (i.e., during the HOLD L1- λ-1 step), a set of detector groups corresponding to the set of launch groups will measure light it receives (labeled as "L-1 LIGHT" in measurement 902) during emission of the generated light from the set of launch groups. The duration of the sample measurement is defined by the amount of time that the set of launch groups is emitting light simultaneously with the set of detector groups being active to measure light. The set of detector groups may output a corresponding set of output signals corresponding to the sample measurement.

Additionally, in some variations an individual measurement may also include a background measurement (labeled "L-1 DARK" for measurement 902), in which the set of detector groups (i.e., the set of detector groups corresponding to the L-1 set of launch groups) measures light incident thereon while the light source unit is not actively generating light. The set of detector groups can output a set of output signals corresponding to the background measurement, which may be used with the set of output signals corresponding to the sample measurement in calculating the one of one or more properties of the sample (e.g., by performing dark signal correction of the set of output signals from the sample measurement). While the background measurement may be performed either before or after the sample measurement, in some instances (such as shown in FIG. 9) it may be desirable for at least a portion the background measurement to be performed simultaneously with the setting step for the multi-stage optical switch network. This may allow for time savings, as the background measurement may be taken while the optical measurement is preparing to take the sample measurement.

The foregoing description, for purposes of explanation, uses specific nomenclature to provide a thorough understanding of the described embodiments. However, it will be apparent to one skilled in the art, after reading this description, that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art, after reading this description, that many modifications and variations are possible in view of the above teachings.

## Claims

1. An optical measurement system comprising:
a light source unit capable of generating light at any of a plurality of wavelengths;
a multi-stage optical switch network optically connected to the light source unit and comprising a plurality of outputs;
a plurality of launch groups, each of which is optically connected to a corresponding output of the plurality of outputs;
a plurality of detector groups; and
a controller configured to perform a measurement sequence using the light source unit, the multi-stage optical switch network, the plurality of launch groups, and the plurality of detector groups, wherein the measurement sequence comprises:
dividing the plurality of wavelengths into a plurality of groups, wherein each group of the plurality of groups is associated with a different corresponding output configuration; and
performing a set of measurements for each wavelength of the plurality of wavelengths at its corresponding output configuration.

2. The optical measurement system of claim 1, wherein:
the plurality of groups includes a first group associated with a first output configuration and a second group associated with a second output configuration; and
performing the set of measurements for each wavelength of the plurality of wavelength comprises:
performing a first set of measurements for a first wavelength of the first group, each measurement of the first set of measurements comprising:
generating light at the first wavelength using the light source unit;
emitting the generated light from a corresponding set of launch groups selected from the plurality of launch groups and having a first number of launch groups corresponding to the first output configuration; and
measuring return light received during the emission of the generated light using a corresponding set of detector groups selected from the plurality of detector groups and having the first number of detector groups; and
performing a second set of measurements for a second wavelength of the second group, each measurement of the second set of measurements comprising:
generating light at the second wavelength using the light source unit;
emitting the generated light from a corresponding set of launch groups selected from the plurality of launch groups and having a second number of launch groups corresponding to the second output configuration; and
measuring return light received during the emission of the generated light using a corresponding set of detector groups selected from the plurality of detector groups and having the second number of detector groups.

3. The optical measurement system of claim 2, wherein:
the first set of measurements comprises multiple measurements having different corresponding sets of launch groups and different corresponding sets of detector groups.

4. The optical measurement system of claim 2, wherein:
each measurement of the first set of measurements further comprises:
configuring the multi-stage optical switch network to route the light at the first wavelength to the corresponding set of launch groups.

5. The optical measurement system of claim 4, wherein:
each measurement of the first set of measurements further comprises:
measuring background light received prior to the emission of the generated light using the corresponding set of detector groups; and
configuring the multi-stage optical switch network in each measurement of the first set of measurements is performed at least partially concurrently with measuring the background light.

6. An optical measurement system comprising:
a light source unit capable of generating light at any of a plurality of wavelengths;
a multi-stage optical switch network optically connected to the light source unit; and
a plurality of launch groups; wherein:
the multi-stage optical switch network comprises a plurality of outputs, each of which is optically connected to a corresponding launch group of the plurality of launch groups, and
the multi-stage optical switch network is controllable to selectively route the light generated by the light source unit to the plurality of launch groups at different output configurations.

7. The optical measurement system of claim 6, further comprising a photonic integrated circuit, wherein:
the photonic integrated circuit includes the light source unit, the multi-stage optical network, and the plurality of launch groups.

8. The optical measurement system of claim 7, wherein each launch group comprises a corresponding outcoupler configured to launch light from the photonic integrated circuit.

9. The optical measurement system of claim 7, further comprising:
a plurality of detector groups.

10. The optical measurement system of claim 9, further comprising:
an interposer, wherein:
the photonic integrated circuit and the plurality of detector groups are mounted on the interposer.

11. The optical measurement system of claim 6, further comprising a first wavelength locking unit.

12. The optical measurement system of claim 11, wherein:
the multi-stage optical switch network comprises a first stage and a second stage, the first stage comprising a first controllable switch;
the first controllable switch comprises a first tap; and
the first wavelength locking unit is optically connected to the multi-stage optical switch network via the first tap.

13. The optical measurement system of claim 12, further comprising:
a second wavelength locking unit, wherein:
the first stage comprises a second controllable switch;
the second controllable switch comprises a second tap; and
the second wavelength locking unit is optically connected to the multi-stage optical switch network via the second tap.

14. The optical measurement system of claim 12, wherein:
the first controllable switch comprises an additional tap;
the first tap extracts light from a first leg of the first controllable switch; and
the additional tap extracts light from a second leg of the first controllable switch.

15. A method of characterizing a sample comprising:
selecting a plurality of wavelengths;
performing a measurement sequence to generate a plurality of sets of output signals, comprising:
dividing the plurality of wavelengths into a plurality of groups, wherein each group of the plurality of groups is associated with a different corresponding output configuration;
performing a set of measurements of the sample for each wavelength of the plurality of wavelength at its corresponding output configuration; and
generating, for each set of measurements, a corresponding set of output signals of the plurality of sets of output signals; and
determining one or more properties of the sample using the plurality of sets of output signals.

16. The method of claim 15, wherein:
the plurality of groups includes a first group associated with a first output configuration and a second group associated with a second output configuration; and
performing the set of measurements of the sample for each wavelength of the plurality of wavelengths comprises:
performing a first set of measurements of the sample for a first wavelength of the first group, each measurement of the first set of measurements comprising:
generating light at the first wavelength;
emitting the generated light from a corresponding set of launch groups selected from a plurality of launch groups and having a first number of launch groups corresponding to the first output configuration; and
measuring return light received during the emission of the generated light using a corresponding set of detector groups selected from a plurality of detector groups and having the first number of detector groups; and
performing a second set of measurements of the sample for a second wavelength of the second group, each measurement of the second set of measurements comprising:
generating light at the second wavelength;
emitting the generated light from a corresponding set of launch groups selected from the plurality of launch groups and having a second number of launch groups corresponding to the second output configuration; and
measuring return light received during the emission of the generated light using a corresponding set of detector groups selected from the plurality of detector groups and having the second number of detector groups.

17. The method of claim 16, wherein:
the first set of measurements comprises multiple measurements having different corresponding sets of launch groups and different corresponding sets of detector groups.

18. The method of claim 16, wherein:
each measurement of the first set of measurements further comprises:
configuring a multi-stage optical switch network to route the light generated at the first wavelength to the corresponding set of launch groups.

19. The method of claim 18, wherein:
each measurement of the first set of measurements further comprises:
measuring background light received prior to emission of the generated light using the corresponding set of detector groups; and
configuring the multi-stage optical switch network in each measurement of the first set of measurements is performed at least partially concurrently with measuring the background light.

20. The method of claim 15 wherein the measurement sequence is divided into a plurality of subsequences, wherein:
each subsequence has a corresponding set of wavelengths of the plurality of wavelengths and a corresponding set of launch groups selected from a plurality of launch groups, and
each subsequence comprises a measurement of the sample for each wavelength in the corresponding set of wavelengths, during which light of the wavelength is emitted from the corresponding set of launch groups.
